Europäisches Patentamt

European Patent Office

Office européen des brevets

(19)

(11) Publication number: **0 185 777**

**A1**

(12) # EUROPEAN PATENT APPLICATION

(21) Application number: **84115204.4**

(22) Date of filing: **12.12.84**

(51) Int. Cl.⁴: **H 02 H 9/04**

(43) Date of publication of application:
**02.07.86 Bulletin 86/27**

(84) Designated Contracting States:
**AT BE CH DE FR GB LI NL SE**

(71) Applicant: **F.I.T.R.E. S.P.A.**
**Via Valsolda No. 15**
**I-20143 Milano(IT)**

(72) Inventor: **Borroni, Enrico**
**Via Bergognone No 27**
**I-20144 Milano(IT)**

(74) Representative: **Petruzzelli, Antonio**
**Via E. De Amicis No. 25**
**I-20123 Milan(IT)**

(54) **Safety circuit system for overvoltage protection of multi-wire lines.**

(57) A safety circuit system for overvoltage protection of multiwire lines (an, bn), in particular, of lines for telecommunication and the like.

The protective system comprises a device (P1) for dispersing the overvoltage energy, connected between the various line wires (an, bn) and, respectively, between each line wire (an, bn) and earth wire (T) by means of a composite bridge of diodes (Dk, Dr, Dt, D't) or overvoltage-activated solid-state switch means in which the energy dispersing device (P1) lies on a common diagonal of the bridge.

Fig. 4

EP 0 185 777 A1

Safety circuit system for overvoltage protection of multi-wire lines

This invention concerns a safety circuit system for protecting two-wire or multiwire lines against overvoltage, for example for protecting telecommunication lines and the like.

It is a known fact that modern electronic equipment, especially when it is connected to very long metal lines (as in the case of telecommunication equipment and the like) can be quite easily damaged by any overvoltage which may occur on the lines.

This due to the fact that, whilst on the one hand the latest electronic components used in manufacturing the equipment offer better and better performances thanks to their increasing integration and the reduction in cost for each single function, on the other hand they are becoming more and more vulnerable to overvoltages due to the continuous reduction in the insulating distances as a result of greater miniaturization, and to an increase in the response rates.

Overvoltages are generally caused by atmospheric phenomena, for example, by electric discharge between clouds and the earth or between one cloud and another, and can also be caused by variations in the electromagnetic field produced by adjacent electric lines during operations or breakdowns on the lines themselves.

Whenever the line subjected to overvoltage is made up of two or more conductors, it is possible to distinguish "differential mode overvoltages", that is to say, between conductor and conductor, and "common mode overvoltages", that is to say, between the same conductors and the earth.

In order to prevent the above-mentioned problems, use is made of suitable protective devices for the purpose of absorbing the energy which accompanies overvoltages, or for enabling it to be absorbed by the portion of the line upstream to the device itself, thereby preventing their output voltages from reaching values which could cause damage to the adjoining equipment.

Among the known protective devices, for electronic circuits, mention can be made, for example, of: gas arresters, variable resistors (varistors), semiconductor suppressors (normal or special, unidirectional or bidirectional Zener diodes, integrated circuits with the function of crowbar-type discharger and other functions). According to the circumstances and the desired degree of protection, these devices are situated between one conductor and another and between the conductor and the earth.

0185777

However, the use of protective devices, in the per sè known manner, gives rise to considerable problems, both from the point of view of higher costs and also from the point of view of full and adequate protection. In fact, in the case of a line with only two conductors, at least three overvoltage energy dispersing devices must be used. Moreover, the various protective devices used on the same line usually have characteristics which are not perfectly identical, with the disadvantage of giving rise to cross components even in the presence of longitudinal overvoltages. Consequently, in the case of lines with several pairs or with a great number of conductors, it would be necessary to use an extremely large number of energy dispersing devices, resulting in considerably high costs and lengthy installation times.

A scope of this invention is to provide a safety circuit system for protecting two-wire and multi-wire lines against overvoltages which is capable of remedying the drawbacks of known devices.

A further scope of this invention is to provide a circuit system for protecting against overvoltage which, although it makes use of known types of energy dissipating devices, is extremely inexpensive, can be made in the form of an integrated circuit and provides the best possible protection on lines with two or more conductors for telecommunication and the like.

These scopes are achieved by the circuit system as claimed in claims 1 and 8.

The invention will be described in greater detail hereunder, with reference to the accompanying drawings, and making a comparison with the known systems. In the drawings:

Fig. 1 shows the conventional use of known devices, in the case of a line with only two conductors;

Fig. 2 shows the use of the protective system according to the invention, also in the case of a line with only two conductors;

Fig. 3 shows the conventional use of known devices, in the case of a line with several conductors;

Fig. 4 shows the use of the protective system according to this invention, in the case of a line with several conductors.

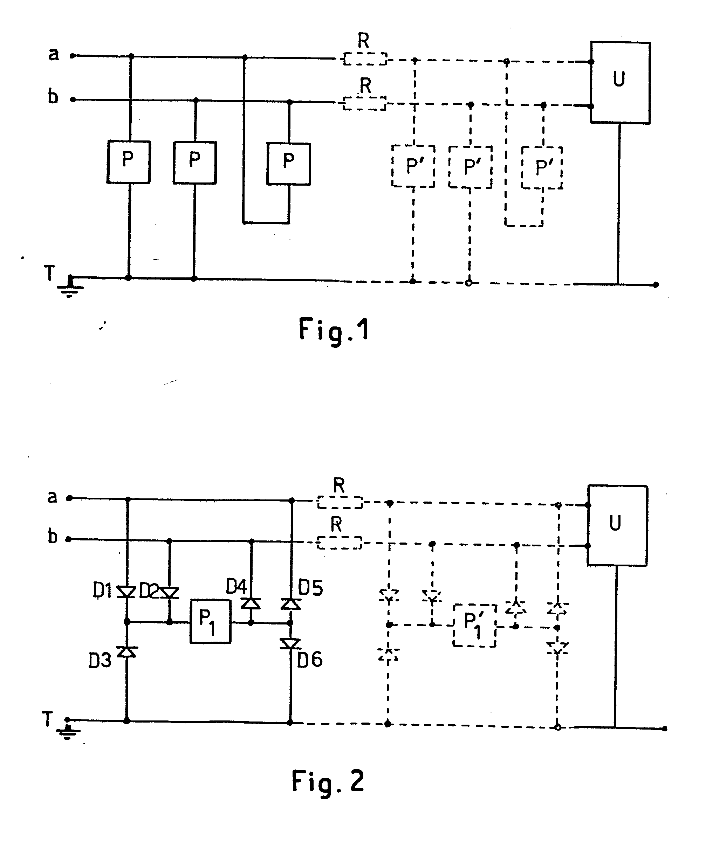

With reference to figures 1 and 2, we will illustrate the case of the protection of an apparatus or group of apparatuses U-connected to a line with only two conductors $a$ and $b$; the reference T in both figures indicates the ground or earth conductor, in a per sè known way, whilst the reference P in figure 1 indicates the devices for dispersing or dissipating the overvoltage energy, both in the direction of the earth and between conductors $a$ and $b$. In the same figure, it can be seen that the conventional systems for a line with two conductors, require at least three overvoltage energy dispersing devices P, inserted as shown in the diagram.

Contrary to the above, and as shown by the continuous line in fig. 2, the circuit system according to this invention, also in the case of a line with only two conductors, comprises only one energy dispersing device P1, which is identical or similar to the devices P according to the known systems of figure 1, said energy dispersing device P1 being inserted in the common diagonal of a composite bridge of diodes according to the wiring diagram shown in figure 2.

The composite bridge of diodes comprises, respectively, on the sides of the device P1, a first set of line diodes D1, D2 on one side and a second set of line diodes D4, D5 on the other, of which the diodes D1 and D2 have their anode connected to the conductors a and b respectively, and their cathode connected to a first common node, whereas the diodes 4 and 5 are connected, in the opposite way, that is to say, with their cathodes to the conductors a and b and with their anode connected to a second common node. The bridge circuit also comprises the earth diodes D3 and D6 of which the diode D3 forms part of the first set of diodes and is connected by its anode to the earth T and by its cathode to the aforesaid first node, whereas the earth diode D6 forms part of the second set of diodes and is connected by its cathode to the earth T and by its anode to the aforesaid second node, on the opposite side of the overvoltage energy dispersing device.

Comparing the figures 1 and 2, it can be seen that in the latter case the same protection of the conductors a and b is achieved, both against differential mode and common mode overvoltages, by using just one energy dispersing device and six bridge-connected diodes, the aforesaid device P1 lying in the common diagonal of the latter. Since it is possible to use low-cost common diodes of a type capable of withstanding high impulsive currents, with respect to the normal permanent currents for which the diodes are normally designed, it is obvious that the solution shown in figure 2 implies a considerable reduction in costs, an advantage which is even more appreciated as the cost of the energy dispersing devices continue to increase, as a result of the use of combined devices; for example, gas arresters plus a variator. A further advantage derives from the fact that, according to this invention, it is possible to use energy dispersing or dissipating devices P1, of the unidirectional type even in the presence of alternative voltage signals in the two line conductors; lastly, by using a single overvoltage energy dispersing device P1, the circuit system of fig. 2 eliminates any problems which may occur in the known systems, as a result of possible differences in the characteristics of one protective device P and the other.

Furthermore, in the case of the device P1 being of the crowbar type (like gas-arresters or integrated circuits with similar function) a simultaneous common safety short-circuit between all the involved conductors and earth takes place during overvoltage transients, thereby granting the maximum degree of protection for the electronic equipment.

This can also apply in the case in which several protective devices are used in cascade, on the same line, as shown by the dotted lines in figures 1 and 2; in order to achieve a more efficient protection. In this case, the known system would be found to require the use of six overvoltage energy dispersing devices P as opposed to the two devices P1 of fig. 2.

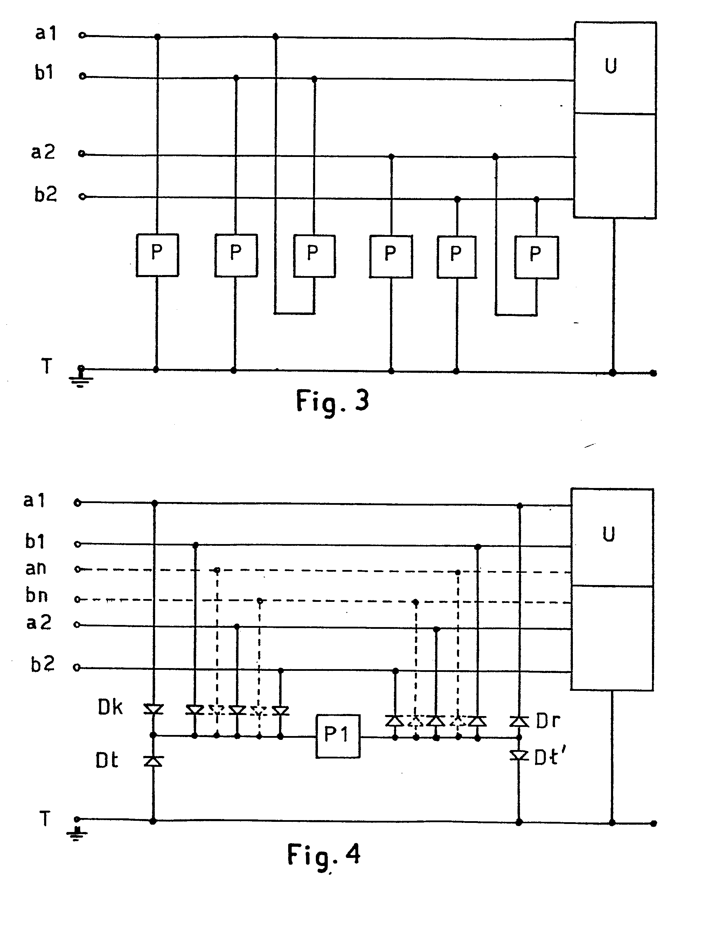

As mentioned previously, the invention can easily be extended to the case of lines with more than two conductors, as shown schematically in figure 4. In this figure, it can be seen that in the case in which there is any given number of pairs of conductors a1, b1, a2, b2, an, bn, the layout of the protective device remains substantially unchanged, with the overvoltage energy dispersing device P1 always inserted in the common diagonal of the composite bridge of two sets of diodes, the only difference being that on both the input and the output sides of this device P1, there will be a number of line diodes Dk and Dr equal to the number of line conductors, each of which connected to its respective conductor as indicated previously, and a single earth diode Dt, D't per side. In said figure 4, the references n, k, and r may assume any given numerical value over two.

The comparison between figure 3 which shows a conventional system for a line made up of two pairs of conductors a1, b1 and a2, b2, and figure 4 for the same number of pairs, shows that in the first case six overvoltage energy dispersing devices P are required, as opposed to the use of only one device P1 according to this invention; in this case too, the cost of the diodes is considerably lower than the cost of the various devices P. Moreover,, it can be seen that the solution in figure 3 does not offer protection against differential mode overvoltages between the conductors of one pair and the conductors of the other, unless a larger number of dispersing devices P are used. In the case in figure 4, according to the invention, such protection between pairs of different conductors is achieved automatically by means of the single device Pl and the two sets of diodes Dk and Dr; in other words, with the circuit system according to this invention, virtually total protection is achieved without having to resort to additional devices.

According to a further scope and possible application of the previously described circuit, the invention can also be used in place of known protective devices, for telecommunication circuits using self-piloting multiple gas arresters, usually of the tripolar type (two line and one earth electrodes) or pentapolar type (four line and one earth electrodes, the latter sometimes distributed over two or more connecting elements).

Said arresters represent a technically advantageous solution, as compared to the use of separate bipolar gas arresters inserted between each wire and the earth, in that it enables the discharge from any given electrode to "pilot" (that is to say, to help) the sparking off of the remaining electrodes, due to the fact that the temporary gas ionization produced by the initial discharge gives rise to an immediate and considerable reduction in the value of their break-down voltage.

So it is evident that a "self-piloting" effect also proves to be intrinsically inherent in the circuit system embodied according to the invention

0185777

- 10 -

and represented in figs. 2 and 4, since the break-down of the overvoltage energy dispersing device P1 (device consisting for example of a simple bipolar gas arrester) is simultaneously made use of by all the line conductors, irrespective of the pair of elements (wire/wire or wire/earth) in which the overvoltage which started the spark takes place.

Other embodiments are possible within the sphere of this invention, for example, the diodes of the two sets which constitute the composite bridge connecting the overvoltage energy dispersing device P1 to the line and earth conductors, may be replaced by transistors or, more generally, by overvoltage-controlled solid-state switch means, so as to enable the embodiment of the entire circuit system claimed herein in the form of an integrated circuit. Alternatively, or in combination, the earth diodes D't or the controlled switch means connected to the earth, could be replaced by other overvoltage energy dispersing devices.

According to a further embodiment it is also possible to use two or more diodes or controlled switch means, connected parallel with one another, for each line conductor and earth, without deviating from the innovatory principles of this invention.

It will be clear, from what has been described and shown in the accompanying drawings, that the invention consists in a particular system for protecting against overvoltages in lines with several conductors, comprising a single overvoltage energy dispersing device inserted in the common diagonal of a composite bridge of diodes, which can be used irrespective of the number of conductors making up the line. Therefore, what has been described and shown in the accompanying drawings, is given merely in order to illustrate the invention and is understood as extended to all the cases that may occur in practice.

Claims

1. A safety circuit system for overvoltage protection of two-wire and multi-wire electric lines, comprising an overvoltage energy dispersing device (P1), characterized by the fact that the energy dispersing device (P1) is connected between the line conductors (an, bn) and, respectively, between each line conductor and the earth (T), by means of a composite bridge of diode means (Dk, Dr, Dt, D't), said energy dispersing device (P1) being inserted in the common diagonal of said composite bridge.

2. Overvoltage protection circuit system for two-wire and multi-wire lines as claimed in claim 1, characterized by the fact that it comprises: a first set of diodes (Dk, Dt) having as many line diodes (Dk) as there are line conductors (an, bn) and of an earth diode (Dt), in which the anode of each line diode (Dk) is connected to a corresponding line conductor (an, bn) and, respectively, the anode of the earth diode (Dt) is connected to the earth (T), and in which the cathode of all the diodes in the set (Dk, Dt) are connected to a first common node; a second set of diodes (Dr, D't) comprising the same number of line diodes (Dr) as that of the previous set (Dk) and an earth diode (D't), in which the cathode of each line diode (Dr) is connected to a respective line conductor (an, bn) and, respectively, the cathode of the earth diode (D't) is connected to the earth (T), and in which the anode of all the diodes (Dr, D't) in the second set are connected to a second common node; and by the fact that an overvoltage energy dispersing device (P1) is connected between the aforesaid first and second nodes.

3. Overvoltage protection circuit system as claimed in claims 1 or 2, characterized by the fact that said overvoltage energy dispersing device (P1) is of the type capable of directly absorbing the energy of the overvoltage.

4. Overvoltage protection circuit system as claimed in claims 1 or 2, characterized by the fact that said overvoltage energy dispersing device (P1) is of the type capable of allowing the aforesaid energy to be absorbed mainly by the line (an, bn) situated upstream to the circuit system itself.

5. Overvoltage protection circuit system as claimed in any of the previous claims, characterized by the fact that said overvoltage energy dispersing device (P1) is of the unidirectional type.

6. Overvoltage protection circuit system as claimed in any of the claims from 1 to 4, characterized by the fact that said overvoltage energy dispersing device (P1) is of the bidirectional type.

7. Overvoltage protection circuit system as claimed in claim 2, characterized by the fact that further energy dispersing devices (P1) are provided in place of the earth diodes (D't).

8. Circuit system as claimed in claim 1, characterized by the fact that each of said means connected to each line conductor or to the earth comprises several diodes connected in parallel to each other.

9. Overvoltage protection circuit device for two-wire and multi-wire lines comprising at least one overvoltage energy dispersing device (P1), characterized by the fact that it comprises in combination: - a first and at least a second set (Dk, Dt; Dr, D't) of overvoltage-controlled solid-state switch means; in which each set (Dk, Dt; Dr, D't) of controlled switch means comprises as many controlled line switches (Dk; Dr) as the number of the line conductors (an, bn) and at least a controlled earth switch (Dt, D't), in which one side of the controlled switch means (Dk, Dt; Dr, D't), in each set, is connected to a line conductor and respectively to the earth whilst the other side is connected to a common node; and by the fact that the overvoltage energy dispersing device is connected between the nodes connecting the two aforesaid sets of switch means.

10.   Circuit system as claimed in claim 9, characterized by the fact that each set of controlled line switch means is connected to the earth by means of a further overvoltage energy dispersing device.

11.   Circuit system as claimed in any of the previous claims, characterized by the fact that the entire circuit system is in the form of integrated circuit equipment.

Fig.1

Fig. 2

1/2

0185777

2/2                    0185777

Fig. 3

Fig. 4

**EUROPEAN SEARCH REPORT**

**0185777**
Application number

EP 84 11 5204

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | EP-A-0 050 034 (POWER INTEGRITY CORP.) <br> * claims 1,3; figures 5,17 * | 1,3-6 | H 02 H 9/04 |
| Y | | 2,9,10 | |
| | --- | | |
| A | DE-B-2 034 392 (SIEMENS AG) <br> * claims 1,2; figures 1,2 * | 1 | |
| | --- | | |
| Y | CH-A- 631 031 (SIEMENS-ALBIS AG) <br> * figure 1 * | 2,9,10 | |
| A | | 7 | |
| | --- | | TECHNICAL FIELDS SEARCHED (Int Cl 4) |
| A | US-A-3 771 022 (ISOKAWA) <br><br> * figures 1,3 * | | H 02 H 9/04 |
| | ----- | | |

The present search report has been drawn up for all claims

| Place of search | Date of completion of the search | Examiner |
|---|---|---|
| BERLIN | 29-07-1985 | LEMMERICH J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82